(19) **Europäisches Patentamt / European Patent Office / Office européen des brevets**

(11) **EP 2 688 967 B1**

(12) **EUROPEAN PATENT SPECIFICATION**

(45) Date of publication and mention of the grant of the patent:
**15.08.2018 Bulletin 2018/33**

(21) Application number: **12760600.2**

(22) Date of filing: **23.03.2012**

(51) Int Cl.:
**B32B 37/12** *(2006.01)*　　**C09J 123/00** *(2006.01)*

(86) International application number:
**PCT/US2012/030313**

(87) International publication number:
**WO 2012/129489 (27.09.2012 Gazette 2012/39)**

(54) **STRETCH FILM LAMINATION ADHESIVE**

HAFTMITTEL ZUR BESCHICHTUNG EINER DEHNFOLIE

ADHÉSIF DE STRATIFICATION DE FILM ÉTIRABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2011 US 201161467059 P**

(43) Date of publication of application:
**29.01.2014 Bulletin 2014/05**

(73) Proprietor: **Henkel IP & Holding GmbH**
**40589 Düsseldorf (DE)**

(72) Inventors:
• **DEJESUS, M., Cristina B.**
**Basking Ridge**
**NJ 07920 (US)**
• **HU, Yuhong**
**Belle Mead**
**NJ 08502 (US)**
• **XENIDOU, Maria**
**201203 Shanghai (CN)**

(74) Representative: **Viering, Jentschura & Partner mbB**
**Patent- und Rechtsanwälte**
**Kennedydamm 55 / Roßstrasse**
**40476 Düsseldorf (DE)**

(56) References cited:
**US-A1- 2004 081 795**　　**US-A1- 2008 076 860**
**US-A1- 2010 305 531**　　**US-A1- 2011 021 103**
**US-A1- 2011 021 103**

**Description**

FIELD OF THE INVENTION

The present invention relates to stretch film lamination adhesives that comprises

a) metallocene catalyzed polyolefin copolymer which has a density greater or equal to 0.870g/cm$^3$ and a peak melting point greater than 100°C and wherein the copolymer is an ethylene-octene comonomer;
b) a plasticizer which has a number average molecular weight greater than 1000 g/mol; and
c) a tackifier with a softening point greater than 110°C;

wherein the adhesive is essentially free of plasticizers with molecular weight less than 1000 g/mol.

. More particularly, the invention relates to adhesives that exhibit desirable viscoelastic properties and are suitable for bonding elastic attachments in the manufacture of disposable articles, such as personal care garments.

BACKGROUND OF THE INVENTION

Stretch film lamination adhesives are applied to substrates and are widely used for various commercial and industrial applications, such as nonwoven products, particularly for personal care garments. Generally, a personal garment has several adhesives because the various parts of the garment require different functionality: core adhesives add strength to the diaper pad when it is wet; construction adhesives bind the waterproof backsheet to the nonwoven absorbent pads; and elastomeric adhesives bind legs, waist and lateral panel sheets. These different parts of the garment require different types of adhesion and elasticity. For example, the lateral side panels of the garment require great unidirectional elasticity. Because the lateral side panels have large surface areas, the adhesives for the panel also require good adhesion and resistance to shape deformation under stress.

To form the lateral side panel of a personal care garment, the elastic on the panel is stretched prior to or after contact with a polyolefin substrate with an elastomeric hot melt adhesive. Preferably, the adhesive must exhibit high resistance to creep: not move substantially under a fixed stress. Moreover, the adhesive must have good cohesion by preventing any detachment from its place of application.

Many commercially available elastomeric adhesives are styrene block copolymers based. Adhesives made from such block copolymers are readily available and are described in the art, e.g., US 7,015,155 and US 2005/0181207. The hard blocks of styrene anchor onto the substrate and hold its shape, allowing for good elasticity. Personal care garments are commonly stored in hot boxcars during storage and transport. However, the elasticity of the panels becomes negatively affected when they are aged at elevated temperatures. Another drawback to the styrene based elastomeric adhesives is the high raw material cost and limited supplies.

There have been efforts to decrease the amount of styrene block copolymers in the elastomeric adhesives. However, such adhesives require large amounts of tackifiers and/or plasticizers, which compromise the performances of the adhesives at high temperatures due to the diffusion of low molecular weight species in the adhesive. The low molecular weight species can, over time, separate out of the adhesive, and this phenomenon is known as "bleed-through." Additionally, the reduction of styrene block copolymer in the formulation dilutes the benefits of the styrenic hard domains, thereby compromising the creep resistance of the adhesive.

Recent developments in polymer technology have allowed for a new generation of film substrates made from olefin chemistry. Olefin-based adhesives typically have been used as construction and core adhesives, but not as elastomeric adhesives, particularly not as stretch film laminant adhesive because the creep resistance is inferior.

US 2010/0305528 is directed to adhesives comprising an ethylene α-olefin polymer, a diacid or maleic anhydride substituted polyethylene and a hydrogenated tackifying polymer. The ethylene α-olefin polymer of the aforementioned reference is based on a random olefin copolymer with a melting point of about 68°C with an onset melting point that is 5-10°C lower. The reference describes that the adhesives made with such polymer have acceptable initial creep performance; however, it is silent as to the creep performance after aging at moderate to high temperatures. In fact, the creep performance when aged at high temperatures is poor, especially when the aging temperature is close to the melting point of the polymer.

US 2011/0021103 is directed to adhesives with a block olefin polymer and low molecular weight plasticizer. Such adhesives also lead to bleed-through and poor creep performance at elevated temperatures due to the diffusion of low molecular weight species. Like US 2010/0305528, this reference describes adhesives with acceptable initial creep recovery, but it is silent as to the creep performance after aging at moderate to high temperatures.

US 2008/0281037 is directed to an ethylene/α-olefin interpolymer based adhesive. Large amount of low molecular weight plasticizer is necessary to formulate the adhesive, which results in an adhesive with poor creep resistance, plasticizer migration and bleed-through.

There continues to be a need in the art for stretch elastic laminant hot melt adhesives with desirable cohesion, creep resistance after aging at moderate to high temperature and minimum bleed-through. The current invention addresses this need.

BRIEF SUMMARY OF THE INVENTION

The invention provides novel adhesives, methods of using the adhesives to bond substrates together, and articles of manufacture comprising the adhesives. It has been discovered that a stretch film lamination adhesive, which comprises

a) metallocene catalyzed polyolefin copolymer which has a density greater or equal to 0.870g/cm$^3$ and a peak melting point greater than 100°C and wherein the copolymer is an ethylene-octene comonomer;
b) a plasticizer which has a number average molecular weight greater than 1000 g/mol; and
c) a tackifier with a softening point greater than 110°C;

wherein the adhesive is essentially free of plasticizers with molecular weight less than 1000 g/mol, has high creep resistance and low plasticizer migration and bleed-through.

In a preferred embodiment the adhesive according to the present invention has a creep recovery of more than 60% at constant shear stress of 2 psi at 38°C.

Yet in another aspect, the invention is directed to an article comprising the stretch film lamination adhesive according to claim 1.

In a preferred embodiment the articles encompassed by the invention include disposable personal care garments such as diapers, sanitary napkins, incontinent pads, bed pads, feminine pads, panty shields, meat pads, and the like.

BRIEF SUMMARY OF THE FIGURES

Figure 1 is a diagram illustrating lateral side panel of a personal care garment.
Figure 2 is a diagram of a stretch elastic laminant.
Figure 3 is a plot of the creep results and measurements of Sample 1.

DETAILED DESCRIPTION OF THE INVENTION

The term "polymer component" as used herein, refers to a single (co)polymer or a blend of different (co)polymers produced by metallocene catalysis polymerization. The polymer component includes block and/or random copolymer. The copolymers are any polymers that have at least two monomers. Typical monomers are ethylene, propylene, butene and octenes. These copolymers typically have narrow molecular weight distributions and are available from various manufactures under the trade name Infuse (Dow Chemical), Engage (Dow Chemical), Versify (Dow Chemical), Vistamaxx (Exxon Mobil), Exact (Exxon Mobil), Tafmer (Mitsui Petrochemical) and LMPO (Idemmitsu). The stretch film lamination adhesive according to the present invention comprises a specific metallocene catalyzed polyolefin copolymer as defined in claim 1.

In one embodiment, the polymer component is an olefin block copolymer (OBC) produced by chain shuttling process. OBC has blocks of "hard" (highly rigid crystalline) and "soft" (highly elastomeric amorphous) segments. U.S. Pat. No. 7,524,911 and WO 2009/029476 describe adhesive compositions based on OBC. Other references that describe OBC's and various applications for OBC's include WO 2006/101966, WO 2006/102016, WO 2008/005501, and WO 2008/067503.

The specific metallocene catalyzed polyolefin copolymer has a density greater or equal to 0.870g/cm$^3$ and a peak melting point greater than 100°C. The melting point of a polymer is typically measured with a differential Scanning calorimetry (DSC), as described in U.S. Publication 2011/0262747. About 3-10 mg of material is weighed and placed in a light aluminum pan (about 50 mg), and then crimped shut. The sample is rapidly heated to 180°C and held isothermal for 3 minutes. The sample is then cooled to -40°C at 10°C /min cooling rate and held at -40°C for 3 minutes. The sample is then heated to 150°C at 10°C/min heating rate. Based on the cooling and the second heating curves, the peak melting point was determined to be the melting point, measured as the maximum in heat flow rate (W/g) with respect to the linear baseline drawn between -30°C and end of melting. The melting points of the polymers herein were measured by the above mentioned DSC method.

In one particular embodiment, the specific metallocene catalyzed polyolefin copolymer is an OBC. The OBC described above can be purchased from Dow under the trade name Infuse.

The adhesive may further comprise a secondary polymer component. The preferred secondary polymer is a metallocene catalyzed polyolefin, amorphous poly-a-olefin, styrene block copolymer and mixtures thereof. The secondary polymer has a melt index greater than 15, measured in accordance with ASTM D1238 with crystallinity less than 20%. The secondary polymer functions to modify the specific physical properties and/or characteristics of the OBC based adhesive composition, as desired. Useful metallocene catalyzed polyolefins are available from Dow Chemical Company as the AFFINITY™.

The stretch film lamination adhesive further comprises a plasticizer. The plasticizer has a number average molecular weight greater than 1000 g/mol. Suitable plasticizers include polybutenes, polyisobutylene, phthalates, benzoates, adipic esters and the like. Particularly preferred plasticizers include polybutenes and polyisobutylenes, phthalates such as di-iso-undecyl phthalate (DIUP), di-iso-nonylphthalate (DINP), dioctylphthalates (DOP), mineral oil, aliphatic oils, olefin oligomers and low molecular weight polymers, vegetable oil, animal oils, paraffinic oil, naphthenic oil, aromatic oil, long chain partial ether ester, alkyl monoesters, epoxidized oils, dialkyl diesters, aromatic diesters, alkyl ether monoester and mixtures thereof.

In one preferred embodiment, the plasticizer is typically present at about 1 to about 35 wt%, more preferably 5 to 30 wt%, based on the total weight of the adhesive.

The stretch film lamination adhesive further comprises a tackifier with a ring and ball softening point, typically measured in accordance with ASTM E28-58T, greater than 110°C.

Useful tackifying resins may include any compatible resin or mixtures thereof such as natural and modified rosins including, for example, as gum rosin, wood rosin, tall oil rosin, distilled rosin, hydrogenated rosin, dimerized rosin, resinates, and polymerized rosin; glycerol and pentaerythritol esters of natural and modified rosins, including, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; copolymers and terpolymers of natured terpenes, including, for example, styrene/terpene and alpha methyl styrene/terpene; polyterpene resins; phenolic modified terpene resins and hydrogenated derivatives thereof including, for example, the resin product resulting from the condensation, in an acidic medium, of a bicyclic terpene and a phenol; aliphatic petroleum hydrocarbon resins; aromatic petroleum hydrocarbon resins and the hydrogenated derivatives thereof; and alicyclic petroleum hydrocarbon resins and the hydrogenated derivatives thereof, having a softening point, as determined by ASTM method E28-58T, of greater than 110°C. Examples of hydrogenated aliphatic tackifiers particularly suitable include Eastotac 130R, Escorez 5415 from Exxon Mobil Chemicals, Arkon P115 from Arakawa and Regalite S7125 from Eastman Chemical, and the like. Also included are the cyclic or acyclic $C_5$ resins and aromatic modified acyclic or cyclic resins. Examples of commercially available rosins and rosin derivatives that could be used to practice the invention include SYLVALITE RE 110L and SYLVARES RE 115 available from Arizona Chemical; Dertocal 140 from DRT; Limed Rosin No.1,GB-120, and Pencel C from Arakawa Chemical. Examples of commercially available phenolic modified terpene resins are Sylvares TP 2040 HM and Sylvares TP 300, both available from Arizona Chemical.

Preferred tackifiers are synthetic hydrocarbon resins. Included are aliphatic or cycloaliphatic hydrocarbons, aromatic hydrocarbons, aromatically modified aliphatic or cycloaliphatic hydrocarbons and mixtures thereof.

Non-limiting examples include aliphatic olefin derived resins such as those available from Exxon under trade name and the Escorez® series. Eastotac series from Eastman are also useful in the invention.

Also useful are aromatic hydrocarbon resins that are $C_9$ aromatic/aliphatic olefin-derived and available from Sartomer and Cray Valley under the trade name Norsolene and from Rutgers series of TK aromatic hydrocarbon resins. Norsolene 1100 is a low molecular weight thermoplastic hydrocarbon polymer commercially available from Cray Valley.

Alpha methyl styrene such as Kristalex F115, 1120 and 5140 from Eastman Chemicals, Sylvares SA series with a ring and ball softening point greater than 110°C from Arizona chemicals are also useful as tackifiers in the invention. Mixtures of two or more described tackifying resins may be required for some formulations.

In one embodiment, the tackifier is typically present at about 10 to about 70 wt%, more preferably up to about 65 wt%, based on the total weight of the adhesive.

The adhesives of the invention may optionally comprise waxes, additives or mixtures thereof.

Waxes suitable for use in the stretch film lamination adhesives include paraffin waxes, microcrystalline waxes, polyethylene waxes, polypropylene waxes, by-product polyethylene waxes, Fischer-Tropsch waxes, oxidized Fischer-Tropsch waxes and functionalized waxes such as hydroxy stearamide waxes and fatty amide waxes. High density low molecular weight polyethylene waxes, by-product polyethylene waxes and Fischer-Tropsch waxes are conventionally referred to in the art as synthetic high melting point waxes.

When used, the wax component will typically be present in amounts of up to about 20 wt %. Formulation comprising a wax component will more typically comprise from about 0.5 to about 5 wt %. Preferred waxes have a melt temperature between 49°C and 121°C, more preferably between 66°C and 110°C, and most preferable between 82°C and 104°C.

The adhesives of the present invention may desirably also contain at least one stabilizer and/or at least one antioxidant. These compounds are added to protect the adhesive from degradation caused by reaction with oxygen

4

induced by for example, heat, light, or residual catalyst from the raw materials such as the tackifying resin.

Among the applicable stabilizers or antioxidants preferably included herein are high molecular weight hindered phenols and multifunctional phenols such as sulfur and phosphorous-containing phenol. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity; this hindrance thus providing the phenolic compound with its stabilizing properties. Representative hindered phenols include; 1,3,5-trimethyl-2,4,6-tris-(3,5-di-tert-butyl-4-hydroxybenzyl)-benzene; pentaerythrityl tetrakis-3(3,5-d i-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-d i-tert-butyl-4-hydroxy-phenyl)-propionate].

Such antioxidants are commercially available from Ciba Specialty Chemicals and include Irganox® 565, 1010, 1076 and 1726 which are hindered phenols. These are primary antioxidants which act as radical scavengers and may be used alone or in combination with other antioxidants such as phosphite antioxidants like Irgafos® 168 available from Ciba Specialty Chemicals. Phosphite catalysts are considered secondary catalysts and are not generally used alone. These are primarily used as peroxide decomposers. Other available catalysts are Cyanox® LTDP available from Cytec Industries and Ethanox® 330 available from Albemarle Corp. Many such antioxidants are available either to be used alone or in combination with other such antioxidants. These compounds are added to the hot melts in small amounts, typically less than about 10 wt%, and have no effect on other physical properties. Other compounds that could be added that also do not affect physical properties are pigments which add color, or fluorescing agents, to mention only a couple. Additives like these are known to those skilled in the art.

Depending on the contemplated end uses of the adhesives, other additives such as pigments, dyestuffs and fillers conventionally added to hot melt adhesives may be incorporated in minor amounts, i.e., up to about 10% by weight, into the formulations of the present invention.

The stretch film lamination adhesive according to the present invention can have a creep recovery of more than 60% at constant shear stress of 2 psi at 38°C. The stretch film lamination adhesive according to the present invention further can have a storage modulus range of about $5x10^5$ dyne/cm$^2$ to about $5x10^6$ dyne/cm$^2$ at 40°C.

The adhesive compositions of the present invention are preferably prepared by blending the components in a melt at a temperature above about 180°C to form a homogeneous blend. Various methods of blending are known in the art and any method that produces a homogeneous blend. The blend is then cooled and may be formed into pellets or blocks for storage or shipping. These pre-formed adhesives can then be reheated to apply onto substrates.

Hot melt application of adhesives are well known to one of skill in the art. The adhesives of the present invention may be applied to a desired substrate by any method known in the art, and include, without limitation roll coating, painting, dry-brushing, dip coating, spraying, slot-coating, swirl spraying, printing (*e.g.*, ink jet printing), flexographic, extrusion, atomized spraying, gravure (pattern wheel transfer), electrostatic, vapor deposition, fiberization and/or screen printing.

A method for bonding a substrate to a similar or dissimilar substrate is disclosed. The method comprises applying to at least a first substrate a molten adhesive of the present invention, bringing a second substrate in contact with the adhesive according to the present invention applied to the first substrate, and allowing the composition to solidify, thereby the first and second substrates are bonded together. The substrates may be alike or dissimilar. Multiple substrates can be joined together with the stretch film lamination adhesive. For example, an elastic substrates (12) is sandwiched between two film substrates (11) with adhesives (13).

"Lateral side panel," as used herein, comprises polymeric constituents such as, but not limited to: polyolefin; polyetherester; polyurethane; polyamide; polyacrylate; or combinations thereof, including random, block, or graft copolymers such as polyester-b-polyurethane block copolymers, polyether-b-polyurethane block copolymers, styrenic block copolymers, and/or polyether-b-polyamide block copolymers. Examples of films for stretchable applications include Flexfeel™ elastic laminates for diaper ears and side panels and FlexAire™ breathable elastic laminates both from Tredegar Film Products and Confi-Fit™, from Fulflex.

For those composites comprising a stretch film lamination adhesive, "creep-resistance" or "creep-resistance value" refers to the holding power of a particular adhesive. For example, if an adhesive is applied to both sides of a stretch film laminant, and two nonwoven substrates are then pressed against the two adhesives to bond to the laminant, then the creep resistance is a measure of the quality of the adhesive bond between the laminants and the nonwoven substrates.

The hot melt adhesives of the invention find use in, for example, the lateral side panel (1) for personal care garments. Different from diaper reattachment tabs (2), lateral side panels have large surface area and require great unidirectional elasticity and resistance to shape deformation.

Materials with excellent stretchability and elasticity are needed to manufacture a variety of disposal and durable articles such as, for example, incontinence pads, disposable diapers, training pants, clothing, undergarments, sports apparel, automotive trim, weather-stripping, gaskets, and furniture upholstery. Stretchability and elasticity are performance attributes that can, for example, function to effectuate a closely conforming fit to the body of a wearer or to the frame of an item. While numerous materials are known to exhibit excellent stress-strain properties and elasticity at room temperatures, it is often desirable for stretch materials to provide a conforming or secure fit during repeated use, extensions and retractions at elevated temperatures such as at body temperatures or in automobile interiors during summer months. The adhesives find particular use as stretch film lamination adhesive for use in nonwoven applications such as baby diaper or adult incontinence items.

EXAMPLE

Samples listed in Table 1 were prepared by using techniques known in the art. The components to each adhesive samples are listed in the Tables. An exemplary procedure involved placing approximately half of the total tackifier in a jacketed mixing kettle, which is equipped with rotors, and raising the temperature to a range from about 100°C to 200°C. When the tackifier melted, stirring was initiated and the rest of the components were added until a homogeneous mass was obtained.

Infuse D9817.15 is an olefin block copolymer having a density of 0.877 g/cc, a well-defined and distinct peak DSC melting temperature of 120°C, and a melt index of 15 g/10 min measured at 190°C, available from Dow Chemical.

Affinity GA1900 is an ethylene/1-octene copolymer having a density of 0.870 g/cc, a broad melting curve having a maximum endothermic DSC melting temperature of 68°C, and a melt index of 1000 g/10min measured at 190°C, available from Dow Chemical.

Engage 8200 is an ethylene/1-octene copolymer having a density of 0.870 g/cc, a broad melting curve having a maximum endothermic DSC melting temperature of 59°C, and a melt index of 5 g/10 min measured at 190°C, available from Dow Chemical.

Vistamaxx 6202 is a propylene/ethylene copolymer having a density of 0.861 g/cc, a broad melting curve having a maximum endothermic DSC melting temperature of 94°C, and a melt index of 20 g/10 min measured at 230°C, available from ExxonMobil.

Eastotac H130 is a hydrogenated hydrocarbon resin available from Eastman Chemical Company with a softening point of 130° C.

Indopol H1500 is a polybutene with an number average molecular of 2200 g/mol available from INEOS Oligomers

Indopol H300 is a polybutene with a number average molecular of 1300 g/mol available from INEOS Oligomers.

Vistamaxx 2320 is a propylene/ethylene copolymer having a density of 0.864 g/cc and a melt index of 200 g/10 min measured at 230°C, available from ExxonMobil.

Vestoplast 704 is an amorphous poly-$\alpha$-olefin/propene rich having a density of 0.87 g/cc and a viscosity of 2000 -3000 mPas at 190°C, available from Evonik Industries.

Licocene PP 1302 is a metallocene polypropylene having a density of 0.87 g/cc and a viscosity of 200 mPas at 170°C, available from Clariant International Ltd.

Eastotac H100 is a hydrogenated hydrocarbon resin available from Eastman Chemical Company with a softening point of 100°C.

Calsol is a naphthenic oil with a number average molecular of 436 g/mol, available from Calumet Lubricants.

Irganox 1010/225 is a hindered phenol antioxidant, available from Ciba Specialty Chemicals.

Table 1. Samples

|  | Sample 1 | Sample C1 | Sample C2 | Sample C3 | Sample C4 | Sample C5 |
|---|---|---|---|---|---|---|
| Infuse D9817.15 | 15.0 | 15.0 | 0 | 0 | 0 | 15.0 |
| Affinity 1900 | 5.0 | 5.0 | 5.0 | 5.0 | 5.0 | 5.0 |
| Engage 8200 | 0 | 0 | 0 | 15.0 | 10.0 | 0 |
| Vistamaxx 6202 | 0 | 0 | 15.0 | 0 | 0 | 0 |
| Eastotac H130 | 53.0 | 53.0 | 53.0 | 53.0 | 58.0 | 0 |
| Eastotac H100 | 0 | 0 | 0 | 0 | 0 | 53.0 |
| Indopol H1500 | 6.8 | 6.8 | 6.8 | 6.8 | 6.8 | 6.8 |
| Indopol H300 | 20.0 | 0 | 20.0 | 20.0 | 20.0 | 20.0 |
| Calsol | 0 | 20.0 | 0 | 0 | 0 | 0 |

(continued)

|  | Sample 1 | Sample C1 | Sample C2 | Sample C3 | Sample C4 | Sample C5 |
|---|---|---|---|---|---|---|
| Irganox 1010/225 | 0.2 | 0.2 | 0.2 | 0.2 | 0.2 | 0.2 |
| Total | 100 | 100 | 100 | 100 | 100 | 100 |
| AR 2000 Creep recovery (%) | 83 | 11 | 0 | 75 | 37.9 | 86.5 |
| Viscosity @ 300°F | 13,750 | 6,137 | 27,100 | 40,800 | 12,850 | 12,170 |
| Softening point (°C) | 113 | 109 | 91 | 87 | 73 | 113 |
| Tg °C | 28 | 20 | 26 | 27 | 37 | 18 |
| Crossover temperature (°C for 3rd tan$\delta$ = 1) | Not available | 85.09 | Not available | Not available | Not available | 77.82 |
| G' for 20°C | 1.59E+07 | 8.05E+06 | 6.21E+06 | 1.80E+07 | 3.88E+07 | 7.14E+06 |
| G' for 25°C | 7.61E+06 | 3.92E+06 | 2.40E+06 | 7.53E+06 | 1.81E+07 | 3.95E+06 |
| G' for 40°C | 1.20E+06 | 7.00E+05 | 3.83E+05 | 6.82E+05 | 9.23E+05 | 9.01E+05 |
| Cube test (Bleed-through) (1 sq. in.= 16) % | 0 | 94 | 19 | 100 | 100 | 56 |
| Shape Retention | Yes | Yes | Yes | No | No | Yes |
| Percent flow | No | No | No | Yes (131%) | Yes (431%) | No |

Adhesives listed in Table 2 were prepared in the same manner as described in US 2011/0021103.

Table 2. Samples

|  | Sample C6 | Sample C 7 | Sample C 8 | Sample C 9 |
|---|---|---|---|---|
| Infuse D9817.15 | 15 | 15 | 15 | 15 |
| Affinity 1900 | 0 | 14.5 | 0 | 0 |
| Vistamaxx 2320 | 0 | 0 | 0 | 14.5 |
| Vestoplast 704 | 14.5 | 0 | 0 | 0 |
| Licocene PP 1302 | 0 | 0 | 14.5 | 0 |
| Eastotac H100 | 60 | 60 | 60 | 60 |
| Calsol | 10 | 10 | 10 | 10 |
| Irganox 1010 / 225(TM) | 0.5 | 0.5 | 0.5 | 0.5 |
| Total parts | 100 | 100 | 100 | 100 |
|  |  |  |  |  |
| AR 2000 Creep recovery (%) | 63 | 80 | 10 | 82 |
| Viscosity @ 300°F | 10020 | 11100 | 5312 | 38560 |
| Tg °C | 20 | 22 | 20 | 21 |
| Crossover temperature (°C for 3rd tan$\delta$ = 1) | 86 | 63 | 74 | 80 |
| G' for 20°C | 1.13E+07 | 2.10E+07 | 6.29E+06 | 1.44E+07 |
| G' for 25°C | 5.32E+06 | 9.94E+06 | 2.68E+06 | 6.74E+06 |
| G'for40°C | 1.03E+06 | 1.18E+06 | 4.33E+05 | 1.45E+06 |

(continued)

|  | Sample C6 | Sample C 7 | Sample C 8 | Sample C 9 |
|---|---|---|---|---|
| Cube test Bleed through (1 sq. in.= 16) % | 75 | 88 | 81 | 75 |
| Shape Retention | Yes | Yes | Yes | Yes |
| %Flow | No | No | No | No |

Creep recovery of the adhesive alone (without any substrates or elastic) was measured by Controlled Stress Rheometer AR-2000 in isothermal mode (38°C) using a parallel plate geometry. Once the sample was equilibrated at 38°C, a controlled shear force was applied to the sample via upper plate. Angular displacement was recorded as a function of time for data analysis, and the creep recovery was calculated by the following equation.

$$\% \text{ Creep recovery} = \left[ 1 - \frac{\text{unrecovered strain}}{\text{maximum strain}} \right] \times 100\% \qquad [1]$$

Viscosity was measured at 300°F (150°C) using a standard Brookfield viscometer, spindle 27.

Mechanical Dynamic Performance of the hot melt adhesive was analyzed by a Rheometrics Dynamic Mechanical Analyzer (Model RDA III) to obtain the storage (or elastic) (G') and loss (G") moduli versus temperature. The instrument was controlled by TA Orchestrator software version 7.2.0.2, with parallel plates 7.9 mm in diameter and separated by a gap of about 2 mm. The adhesive sample was loaded and then cooled to about -30° C, and the time program was started. The program test increased the temperature at 5° C intervals followed by a soak time at each temperature for 10 seconds. The convection oven containing the sample is flushed continuously with nitrogen. The frequency was maintained at 10 rad/s. The initial strain at the start of the test was 0.05% (at the outer edge of the plates). An autostrain option in the software was used to maintain an accurately measurable torque throughout the test. The option is configured such that the maximum applied strain allowed by the software was 30%. The autostrain program adjusts the strain at each temperature increment, if warranted, using the following procedure. The shear storage or elastic modulus (G') and the shear loss modulus (G") were calculated by the software from the torque and strain data. The crossover temperature was measured as the point where $\tan\delta = 1$, where the storage (or elastic) modulus (G') and shear loss modulus (G") crossover on the axes of the same scale on a log-log plot of a temperature scan.

Cube flow was tested by (1) pouring a molten sample into a release mold to form a 1" cube, (2) equilibrating at 25°C for 24 hours, (3) removing the adhesive cube from the release mold, (4) placing the cube on a 0.25 inch square graph paper, and (5) placing the entire cube-paper in a controlled oven at 60°C for 24 hours. There are a total 16 squares (0.25 x 0.25 in) to cover the area of 1 x 1 inch cube. The cube was then removed from the oven and the number of squares covered by the stain, which represents the migration of low molecular weight species, left under the adhesive sample was recorded.

The shape retention and flow measurements were calculated from the cube flow test. The percent flow (or shape retention) was calculated using the following equation:

$$\% \text{ flow} = (\text{Final Area} - \text{Initial Area}) / \text{Initial Area} \qquad [2]$$

The bleed-through was calculated from the cube flow test using the following equation:

$$\% \text{ bleed through} = (\# \text{ of stained squares}) / (\# \text{ of total squares} = 16) \times 100 \qquad [3]$$

Sample 1 adhesive was formulated with a metallocene catalyzed polyolefin copolymer which has a density greater or equal to $0.870 \text{g/cm}^3$ and a melting point greater than 100°C, a plasticizer with a molecular weight greater than 1,300 g/mol. The creep recovery averaged 83% and the cube test was 0 indicating no migrations of low molecular weight species.

For Sample C1, a low molecular weight plasticizer replaced Sample 1's plasticizer. The creep recovery of Sample C1 is significantly lower than the Sample 1. Also, significant migration of low molecular species was confirmed by the cube test /bleed through results.

For Sample C2, a metallocene catalyzed polyolefin copolymer with a melting temperature of 107°C was utilized in the adhesive. The use of Vistamaxx 6202 resulted in no creep recovery and viscosity range that is not suitable for processability (application) at 300°F (150°C).

A metallocene catalyzed polyolefin with a melting temperature of 59°C was used in Sample C3. While the creep recovery is acceptable, the adhesive had significant migration of low molecular species is observed as indicated by the cube test and bleed-through results. Also, the viscosity in this adhesive is not suitable for processability at 300°F (150°C).

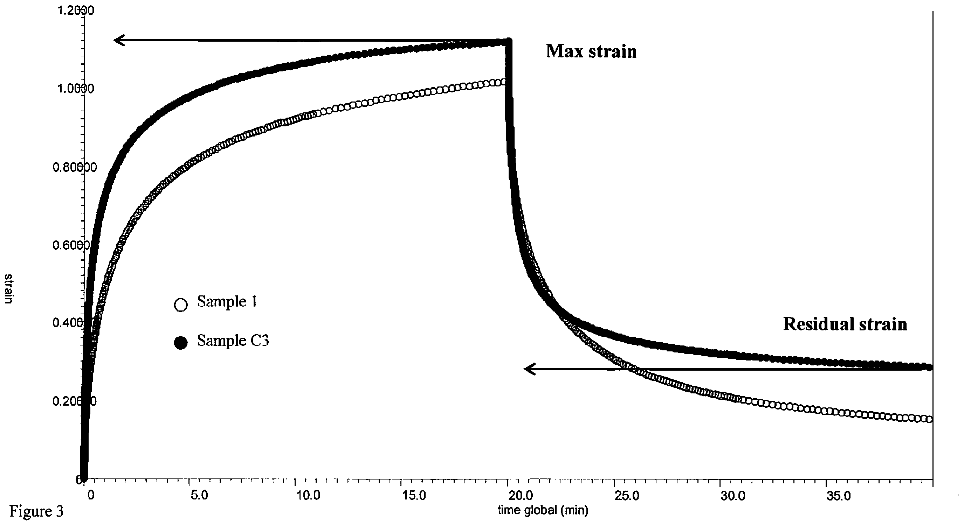

Figure 3 is a curve of the strain (angular displacement) as a function of time for Sample 1 and Sample C3, as measured in Rheometrics Dynamic Mechanical Analyzer (method described above). Time 0-20 minutes of the curve illustrates the elasticity of the adhesives and time 20-40 minutes illustrates the recovery of the adhesive after the shear force was released. The strain at time 20-40 minutes demonstrates the recoverability of the sample as calculated by the creep recovery equation [1]. The creep recovery is a function of both the maximum strain achieved by the sample under 2 psi stress condition as well as the final residual strain after the 2 psi stress is removed as seen in Figure 3. Sample 1 has an AR creep recovery value of 83% and sample C3 has a recovery of 75%.

For Sample C4, high melt flow polymer (Affinity 1900) was added to Sample C3 with high melt to decrease the adhesive viscosity. While the adhesive's viscosity decreased, creep recovery and cube flow of the adhesive were negatively affected.

Sample C5 illustrates that the use of a low softening point tackifier results in an acceptable creep recovery but the cube test indicates migration of low molecular species.

Samples C6, C7, C8 and C9 were all formulated with a metallocene catalyzed polyolefin copolymer which has a density greater or equal to 0.870g/cm$^3$ and a melting point greater than 100°C (Infuse 9817) but with a low molecular weight plasticizer (Calsol, Mw: 436 g/mol) and additional polymers and waxes such as Vestoplast 704, Affinity 1900, Licocene PP1302 and Vistamaxx 2320, respectively. The creep recovery for C6, C7 and C9 averaged from 63 to 82%, however, the cube test bleed through confirmed that significant migration of low molecular weight (low molecular weight plasticizer) species occurs, and therefore, compromising the performance of the disposable article when aged and/or stored a moderate temperatures such as 60°C. Sample C8 does not have the required creep recovery to be used in stretch lamination applications.

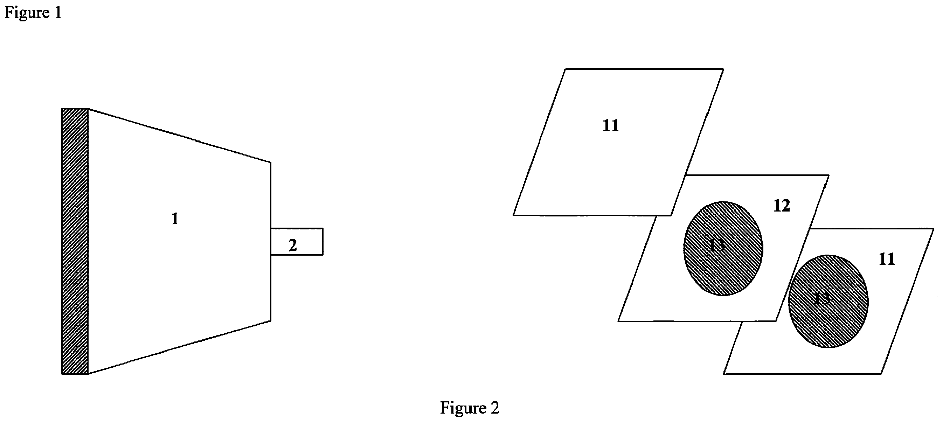

A tri-layer film laminant was formed as set forth in Figure 2 (flexible film intercalated between two nonwoven's layers). Sample 1 adhesive was coated at 160°C and 175°C with a slot coater, with a target coating level of about 6.5 gsm (grams per square meter) per side. Initial and aged peel strengths of the film laminants were measured and reported in Table 2.

The peel strength of Sample 1 is reported in Table 3. The peel strength is the average load per unit width of bond line required to separate bonded materials where the angle of separation is 180-degrees. The peel strength was measured by pulling the film lamination (Trilamination: Nonwoven/adhesive/stretchable film/adhesive/Nonwoven) under tensile mode at 300 mm/min. One end of the sample was clamped in a stationary jaw and the other end was clamped to the mobile.

Table 3: Peel strength results

|  | Slot coat 160°C | Slot coat 175°C |
| --- | --- | --- |
| Initial Peel value (N/cm) | 1.8 | 2.1 |
| Aged 1 week @ 40°C (N/cm) | 1.9 | 2.7 |
| Aged 3 week @ RT (N/cm) | 2.0 | 2.7 |

As shown in Table 3, the peel strength of the adhesive remains at the initial levels over time and at aging conditions.

**Claims**

1.  A stretch film lamination adhesive comprising:

   a) metallocene catalyzed polyolefin copolymer which has a density greater or equal to 0.870g/cm$^3$ and a peak melting point greater than 100°C and wherein the copolymer is an ethylene-octene comonomer;
   b) a plasticizer which has a number average molecular weight greater than 1000 g/mol; and
   c) a tackifier with a softening point greater than 110°C;

   wherein the adhesive is essentially free of plasticizers with molecular weight less than 1000 g/mol.

2. The stretch film lamination adhesive of claim 1 wherein the plasticizer is a polybutene with a molecular weight greater than 1300 g/mol.

3. The stretch film lamination adhesive of claim 1, wherein the adhesive has a creep recovery of more than 60% at constant shear stress of 2 psi at 38°C.

4. An article comprising the adhesive of claim 1.

5. The article of claim 4 which is a diaper, diaper pad or other hygienic articles.

6. A method for bonding a substrate to a similar or dissimilar substrate comprising the steps:

   applying to at least a first substrate a molten adhesive according to any of claims 1 to 3,
   bringing a second substrate in contact with the adhesive applied to the first substrate,
   and allowing the composition to solidify, thereby bonding the first and second substrates together.


**Patentansprüche**

1. Dehnfolienkaschierklebstoff, umfassend:

   a) durch Metallocen katalysiertes Polyolefincopolymer, das eine Dichte von mehr als oder gleich 0,870 g/cm$^3$ und einen Höchstschmelzpunkt von mehr als 100 °C aufweist und wobei das Copolymer ein Ethylen-Octen-Comonomer ist;
   b) einen Weichmacher, der ein zahlenmittleres Molekulargewicht von mehr als 1000 g/mol aufweist; und
   c) einen Klebrigmacher mit einem Erweichungspunkt von mehr als 110 °C;

   wobei der Klebstoff im Wesentlichen frei von Weichmachern mit einem Molekulargewicht von weniger als 1000 g/mol ist.

2. Dehnfolienkaschierklebstoff nach Anspruch 1, wobei der Weichmacher ein Polybuten mit einem Molekulargewicht von mehr als 1300 g/mol ist.

3. Dehnfolienkaschierklebstoff nach Anspruch 1, wobei der Klebstoff eine Kriecherholung von mehr als 60 % bei konstanter Scherbeanspruchung von 2 psi bei 38 °C aufweist.

4. Erzeugnis, den Klebstoff nach Anspruch 1 umfassend.

5. Erzeugnis nach Anspruch 4, wobei es sich um eine Windel, einen Windel-Pad oder andere Hygieneerzeugnisse handelt.

6. Verfahren zum Verkleben eines Substrats mit einem ähnlichen oder unterschiedlichen Substrat, die Schritte umfassend:

   Auftragen eines geschmolzenen Klebstoffs nach einem der Ansprüche 1 bis 3 auf mindestens ein erstes Substrat,
   Inberührungbringen eines zweiten Substrats mit dem auf das erste Substrat aufgetragenen Klebstoff,
   und Ermöglichen der Zusammensetzung, zu verfestigen, dadurch Verkleben des ersten und des zweiten Substrats miteinander.


**Revendications**

1. Adhésif de stratification de film étirable, comprenant :

   a) un copolymère de polyoléfine catalysé au métallocène qui présente une densité supérieure ou égale à 0,870 g/cm$^3$ et un point de fusion pic supérieur à 100 °C et le copolymère étant un comonomère d'éthylène-octène ;
   b) un plastifiant qui présente un poids moléculaire moyen en nombre supérieur à 1 000 g/mol ; et

c) un agent poisseux avec un point de ramollissement supérieur à 110 °C ;

l'adhésif étant sensiblement exempt de plastifiants avec un poids moléculaire inférieur à 1 000 g/mol.

2.  Adhésif de stratification de film étirable selon la revendication 1, dans lequel le plastifiant est un polybutène avec un poids moléculaire supérieur à 1 300 g/mol.

3.  Adhésif de stratification de film étirable selon la revendication 1, dans lequel l'adhésif présente une récupération au fluage de plus de 60 % à une contrainte de cisaillement constante de 2 psi à 38 °C.

4.  Article comprenant l'adhésif selon la revendication 1.

5.  Article selon la revendication 4 qui est une couche-culotte, une garniture de couche ou d'autres articles hygiéniques.

6.  Procédé de liaison d'un substrat à un substrat similaire ou différent comprenant les étapes consistant à :

appliquer à au moins un premier substrat un adhésif fondu selon l'une quelconque des revendications 1 à 3,
mettre en contact un second substrat avec l'adhésif appliqué au premier substrat,
et permettre à la composition de se solidifier, liant ainsi les premier et second substrats ensemble.

Figure 1

EP 2 688 967 B1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7015155 B
- US 20050181207 A
- US 20100305528 A
- US 20110021103 A
- US 20080281037 A
- US 7524911 B
- WO 2009029476 A
- WO 2006101966 A
- WO 2006102016 A
- WO 2008005501 A
- WO 2008067503 A
- US 20110262747 A